# EUROPEAN PATENT SPECIFICATION

(11) **EP 1 475 557 B1**
(45) Date of publication and mention of the grant of the patent: **19.07.2006**
(21) Application number: 04252679.8
(22) Date of filing: 07.05.2004
(51) Int. Cl.: F16J 15/40

(54) **Oil film sealing device for a rotating shaft**
Ölfilm - Wellendichtung
Film d'huile formant un joint pour un arbre rotatif

(30) Priority: 08.05.2003 US 431987
(43) Date of publication of application: 10.11.2004
(73) Proprietor: DRESSER-RAND COMPANY, Olean, NY 14760 (US)
(72) Inventor: Fox, Ronald Elton Jr., Bradford, Pennsylvania 16701 (US)
(74) Representative: Every, David Aidan

(56) References cited:
- US-A- 3 912 342
- US-A- 4 486 024
- US-A- 4 783 179
- US-A- 5 186 277
- US-A- 5 582 414
- US-A- 6 070 881

## Description

### Background

The present invention relates to a sealing device that includes a seal ring that floats in an oil film to establish a seal for a rotating shaft, such as found in a centrifugal compressor, or the like.

Sealing devices that include a seal ring that floats in an oil film between the inner surface of the ring and the outer surface of a rotating shaft to isolate various types of process gases in a centrifugal compressor, or the like, are well known. Since these devices are often subjected to extreme pressures, unstable operation, and significant operating excursions, yet must resist corrosion and erosion from certain process gases, it is difficult for them to maintain a proper seal yet prevent damage to the rotating shaft.

Some of the more sophisticated sealing devices of this type deploy an anti-friction lining, such as a Babbitt, on the inner surface, or bore, of the seal ring. The Babbitt usually serves as a sacrificial material and, as such, is designed to fail or melt during use to avoid damage to the rotating shaft. However, this leads to other problems, since when the seal ring fails or melts, or is otherwise upset, the oil pumping and seal geometry are lost and leakage across the seal ring can become relatively high.

Therefore, what is needed is a sealing device of the above type that overcomes the above problems.
US-A-4486024 discloses a gland seal assembly for a dynamoelectric machine rotor having dual seal rings of the kind described above in which oil passes between the ring and a rotating shaft.

### Brief Description of the Drawings

Fig. 1 is a sectional view depicting a portion of a centrifugal compressor and a sealing device according to an embodiment of the invention.

Fig. 2 is an enlarged view of the seal ring of Fig. 1.

### Detailed Description

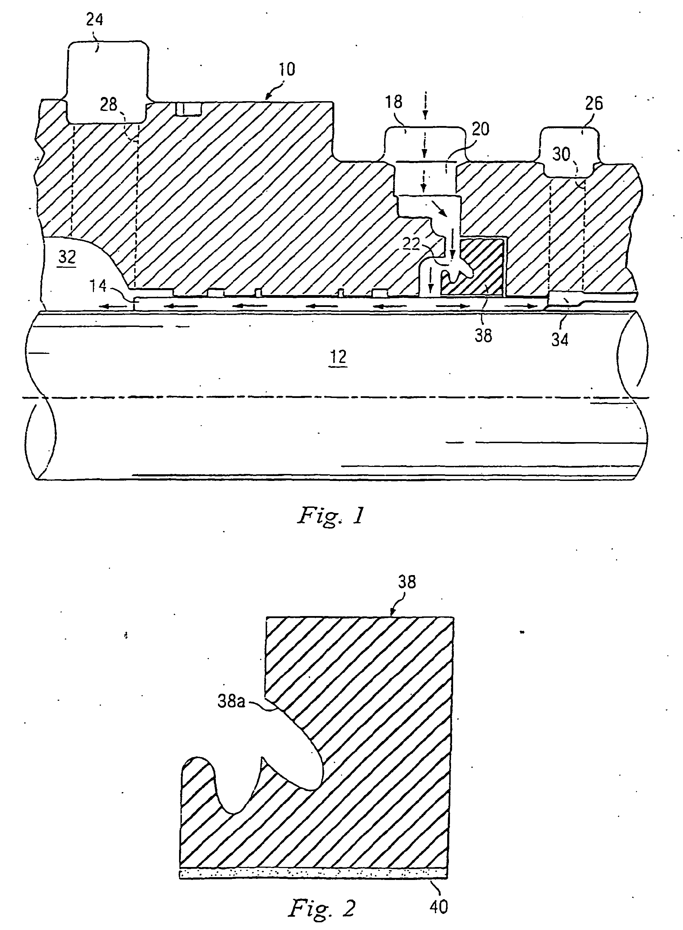

Referring to Fig. 1 of the drawings, the reference numeral 10 refers, in general, to a casing of a centrifugal compressor, which extends around and supports a rotor shaft 12 extending through an axial bore formed in the casing. Only a portion of the casing 10 and the shaft 12 are shown, it being understood that a driver (not shown) is provided in a separate casing for rotating the shaft. Also, an inlet is provided in the casing 10 for receiving process gas from an external source, and the gas is compressed by rotor impellors (not shown) mounted on the shaft 12 before the gas is discharged from the latter casing, in a conventional manner.

An axially-extending sleeve 14 is mounted on a portion of the outer surface of the shaft 12 for rotation therewith. An inlet 18 is formed in the casing 10, and a radially-extending passage 20 connects the inlet to a cavity 22 surrounding the sleeve 14. Two drains 24 and 26 are formed in the casing 10 to either side of, and in a spaced relation to, the inlet 18. The drains 24 and 26 are connected to two passages 28 and 30, respectively, that extend to two cavities 32 and 34, respectively, formed in casing 10 and located in a spaced relation to the respective ends of the sleeve 14. Although not clear from the drawing due to scale limitations, it is understood that the outer surface of the sleeve 14 is slightly spaced from the corresponding inner surface of the casing 10 to permit rotation of the shaft 12 and the sleeve.

A seal ring 38 is disposed in a portion of the cavity 22 with its inner surface, or bore, in a closely spaced relation with the sleeve 14. Referring to Fig. 2, the inner surface of the seal ring 38 is provided with a non-sacrificial, relatively hard, diamond-like coating 40 that is harder than the material forming the seal ring. The coating 40 is applied to the latter surface by vapor deposition, or by any other conventional technique in accordance with the method disclosed in U.S. patent No. 6,086,962 assigned to Diamonex, Incorporated of Allentown, Pa., the disclosure of which is hereby incorporated by reference. According to this patent, the coating is deposited on the inner surface of the seal ring 38 by the following steps:

(a) mounting the seal ring 38 in a deposition vacuum chamber containing a Hall-Current ion source and evacuating the air from the chamber;

(b) supplying an inert gas to at least one self-sustaining cathode electron source of the Hall-Current ion source and exciting the cathode electron source to provide a supply of electrons to an anode of the Hall-Current ion source;

(c) introducing plasma maintenance gases through a gap of the anode and into an anode discharge region within the vacuum chamber and applying a voltage to provide an anode discharge current to flow between the anode and the electron source, wherein a magnetic field established by electromagnetic means is formed across the anode discharge region and electrons ionize the plasma maintenance gases to form a plasma beam of gas ions throughout the anode discharge region;

(d) plasma ion beam depositing a layer of DLC from carbon-containing precursor gases using the plasma beam while thermally cooling the anode; and

(e) increasing the vacuum chamber pressure to atmospheric pressure.

As a result, the coating 40 includes a first layer of silicon carbon, specially mixed hydrocarbon gases, and a small amount of Argon having the following properties:
- Thickness 3-5 microns (0.1-0.2 mils).
- Hardness Vickers 1,000-3,000
- Surface Finish Same as inner surface of seal ring 38
- Bond Strength 80-100 ksi.
- Max. working temp. less than 500 deg. C (930deg. F)
- Coefficient of Friction less than .1
- Electrical Resistivity 10000000 - 10000000000000 ohm-cm
- Deposition temp. less than 150 deg. C (300 deg. F)
- Chemical resistance Inert

The coating 40 is characterized by relatively high hardness and resistance to wear, abrasion, and corrosion to the extent that it maintains its structural integrity and original geometry, as well as that of the seal ring 38, during use even during unstable compressor operation. Since the coating 40 is well disclosed on the Diamonex website (www.diamonex.com) and in the company brochures, which are incorporated by reference, it will not be described in further detail.

The outer surface of the seal ring 38 is cut away to define an irregular surface 38a to keep the seal ring relatively cool during operation of the compressor. It is also understood that another seal, such as a labyrinth seal, or the like (not shown) can be mounted in the casing 10 in or near the cavity 32 (Fig. 1) for engaging the shaft 12.

In operation, oil from an external source is introduced to the inlet 18 and passes into and through the passage 20 and the cavity 22 and to the corresponding outer surface of the sleeve 14. The oil then passes in two axial directions in the space between the outer surface of the sleeve 14 and the corresponding inner surface of the casing - one in an upstream direction from right-to-left as viewed in Fig. 1 until the oil reaches the cavity 32, and the other in a downstream direction from left-to-right until the oil reaches the cavity 34. (It is noted that, due to space limitations, the flow arrows shown in Fig. 1 are placed on the sleeve 14 although the actual flow of the oil is in the space between the outer surface of the sleeve and the corresponding inner surfaces of the casing 10 and the seal ring 38.) The oil then passes from the cavities 32 and 34 to the drains 24 and 26, respectively, for discharge from the casing 10. It is understood that the flow of the oil in the above manner can be assisted by pumps (not shown) and/or by gravity.

During its passage in the downstream direction from left-to-right as described above, the oil passes through the interface between the coating 40 on the inner surface of the seal ring 38 and the corresponding outer surface of the sleeve 14, so that the seal ring 38 floats on the film of oil, yet the coating 40 is located close enough to the corresponding outer surface of the sleeve 14 to form a seal.

Although not shown in the drawings, and as stated above, one or more rotor impellers (not shown) are mounted on the shaft 12 downstream of the seal ring 38. Also, an inlet is provided in the casing 10 into which process gas is introduced before it is directed to a chamber in a manner so that it is compressed by the rotor impellers before being discharged from the casing. The seal ring 38 functions to seal against the passage of the process gas through the interface between it and the sleeve 14 and, in this context, some of the process gas can mix with the oil flowing into the cavity 34 before the oil is discharged from the drain 26. The relatively hard coating 40 resists wear, abrasion, and corrosion, and thus the structural integrity and original geometry of it and the seal ring 38 are maintained during use even during unstable compressor operation.

It is understood that variations may be made in the foregoing without departing from the scope of the invention. For example, the particular shape of the seal ring 38 can be varied within the scope of the invention. Also, it is understood that spatial references, such as "left", "right', "radial", "axial", "upstream", "downstream", etc, are for the purpose of illustration only and do not limit the specific orientation or location of the structure discussed above.

Although only a few exemplary embodiments of this invention have been described in detail above, those skilled in the art will readily appreciate that many other modifications are possible in the exemplary embodiments without materially departing from the novel teachings and advantages of this invention. Accordingly, all such modifications are intended to be included within the scope of this invention as defined in the following claims. In the claims, means-plus-function clauses are intended to cover the structures described herein as performing the recited function and not only structural equivalents, but also equivalent structures.

## Claims

1. A sealing device for sealing around a rotating shaft (12), the device comprising a seal ring(38) having an inner surface extending around the shaft in a spaced relation to the shaft, **characterised in that** there is provided a coating(40) disposed on the inner surface of the seal ring, and oil extending in the space between the coating and the outer surface of the shaft, wherein the coating is of a material that is harder than that of the seal ring and maintains its structural integrity and geometry during rotation of the shaft.

2. The device of claim 1 wherein the coating(40) comprises a layer of silicon carbon.

3. The device of claim 1 wherein the coating (40) comprises mixed hydrocarbon gases and argon.

4. The sealing device of claim 1 wherein the coasting (40) is a diamond-like carbon.

5. The sealing device of claim 1 wherein the coating (40) is applied to the inner surface by vapor deposition.

6. The scaling device of claim 1 wherein the coating(40) is a polycrystalline.

7. The sealing device of claim 6 wherein the polycrystalline is produced by a hot filament chemical vapor deposition process.

8. The sealing device of claim 1 further comprising means for circulating the oil through the space between the outer surface of the shaft (12) and the coating (40).

9. The sealing device of claim 8 wherein the means comprises a casing (10) extending around the shaft(12) and the seal ring(38) and having an inlet(18) for receiving the oil, a passage (20) for directing the oil to and from the space, and an outlet (24, 26) for discharging the oil.

10. A compressor comprising a sealing device according to any one of claims 1 to 9.

## Patentansprüche

1. Dichtungsvorrichtung zum Abdichten um eine sich drehende Welle (12), wobei die Vorrichtung einen Dichtungsring (38) umfasst, der eine Innenfläche hat, die sich in einer Abstandsbeziehung zu der Welle um die Welle erstreckt, **dadurch gekennzeichnet, daß** eine Beschichtung (40) bereitgestellt wird, die an der Innenfläche des Dichtungsrings angeordnet ist, und sich Öl in dem Raum zwischen der Beschichtung und der Außenfläche der Welle befindet, wobei die Beschichtung aus einem Material ist, das härter ist als das des Dichtungsrings, und während des Drehens der Welle ihre strukturelle Integrität und Geometrie beibehält.

2. Dichtungsvorrichtung nach Anspruch 1, wobei die Beschichtung (40) eine Lage aus Silizium-Kohlenstoff umfasst.

3. Dichtungsvorrichtung nach Anspruch 1, wobei die Beschichtung (40) gemischte Kohlenwasserstoffgase und Argon umfasst.

4. Dichtungsvorrichtung nach Anspruch 1, wobei die Beschichtung (40) ein diamantartiger Kohlenstoff ist.

5. Dichtungsvorrichtung nach Anspruch 1, wobei die Beschichtung (40) durch Aufdampfen auf die Innenfläche aufgebracht ist.

6. Dichtungsvorrichtung nach Anspruch 1, wobei die Beschichtung (40) ein polykristalliner Stoff ist.

7. Dichtungsvorrichtung nach Anspruch 6, wobei der polykristalline Stoff durch ein chemisches Glühfaden-Aufdampfverfahren erzeugt wird.

8. Dichtungsvorrichtung nach Anspruch 1, die ferner Mittel zum Umwälzen des Öls durch den Raum der Außenfläche der Welle (12) und der Beschichtung (40) umfasst.

9. Dichtungsvorrichtung nach Anspruch 8, wobei das Mittel ein Gehäuse (10) umfasst, das sich um die Welle (12) und den Dichtungsring (38) erstreckt und einen Einlass (18) zum Aufnehmen des Öls, einen Durchgang (20) zum Leiten des Öls zu und von dem Raum und einen Auslaß (24, 26) zum Ablassen des Öls hat.

10. Verdichter, der eine Dichtungsvorrichtung nach einem der Ansprüche 1 bis 9 umfasst.

## Revendications

1. Dispositif d'étanchéité pour établir l'étanchéité autour d'un arbre rotatif (12), le dispositif comprenant une bague d'étanchéité (58) comportant une surface interne s'étendant autour de l'arbre, de manière espacée par rapport à l'arbre, **caractérisé en ce qu'**un revêtement (40) est agencé sur la surface interne de la bague d'étanchéité, l'huile s'étendant dans l'espace entre le revêtement et la surface externe de l'arbre, le revêtement étant composé d'un matériau plus dur que la bague d'étanchéité et maintenant l'intégrité structurale et l'intégrité géométrique au cours de la rotation de l'arbre.

2. Dispositif selon la revendication 1, dans lequel le revêtement (40) est composé d'une couche de silicium-carbone.

3. Dispositif selon la revendication 1, dans lequel le revêtement (40) est composé de gaz d'hydrocarbures mélangés et d'argon.

4. Dispositif d'étanchéité selon la revendication 1, dans lequel le revêtement (40) est composé d'un carbone du type diamant.

5. Dispositif d'étanchéité selon la revendication 1, dans lequel le revêtement (40) est appliqué sur la surface interne par métallisation sous vide.

6. Dispositif d'étanchéité selon la revendication 1, dans lequel le revêtement (40) est constitué par un polycristallin.

7. Dispositif d'étanchéité selon la revendication 6, dans lequel le polycristallin est produit par un processus de métallisation sous vide chimique à fil chaud.

8. Dispositif d'étanchéité selon la revendication 1, comprenant en outre un moyen pour faire circuler l'huile à travers l'espace entre la surface externe de l'arbre (12) et le revêtement (40).

9. Dispositif d'étanchéité selon la revendication 8, dans lequel le moyen comprend un boîtier (110) s'étendant autour de l'arbre (12) et de la bague d'étanchéité (38) et comportant une entrée (18) pour recevoir l'huile, un passage (20) pour diriger l'huile vers l'espace et à partir de celui-ci, et une sortie (24, 26) pour décharger l'huile.

10. Compresseur comprenant un dispositif d'étanchéité selon l'une quelconque des revendications 1 à 9.
